# EUROPEAN PATENT SPECIFICATION

(11) **EP 2 352 781 B1**
(45) Date of publication and mention of the grant of the patent: **06.01.2016**
(21) Application number: 09824275.3
(22) Date of filing: 06.11.2009
(51) Int. Cl.: C08L 67/04, C08L 3/06, C08J 3/22, C08L 101/16

(54) **BIODEGRADABLE POLYMER COMPOSITION**
BIOLOGISCH ABBAUBARE POLYMERZUSAMMENSETZUNG
COMPOSITION POLYMÈRE BIODÉGRADABLE

(30) Priority: 06.11.2008 AU 2008905740
(43) Date of publication of application: 10.08.2011
(73) Proprietor: Tristano Pty Ltd, Hawthorn, Victoria 3122 (AU)
(72) Inventor: CHEN, Changping, Jiangsu (CN); SCHEIRS, John, Edithvale, Victoria 3196 (AU)
(74) Representative: van Kooij, Adriaan
(86) International application number: PCT/AU2009/001443
(87) International publication number: WO 2010/051589

(56) References cited:
- WO-A1-2007/012142
- WO-A1-2008/011668
- WO-A1-2008/011668
- WO-A2-2008/037744
- WO-A2-2008/037749
- US-A1- 2001 007 883
- US-A1- 2005 288 399
- US-B1- 6 506 824
- PATENT ABSTRACTS OF JAPAN & JP 9 071 638 A 18 March 1997

## Description

### FIELD OF THE INVENTION

The present invention relates in general to biodegradable polymer compositions. In particular, the invention relates to biodegradable polymer compositions comprising polysaccharide and to a method of preparing the same.

### BACKGROUND OF THE INVENTION

The disposal of consumer waste has become a significant problem in many industrialised countries. For example, there are relatively few sites that remain available for landfill in places such as Europe and Japan. A considerable volume of consumer waste is made up of polymeric material, and there has been a concerted effort to introduce polymer recycling strategies to reduce such polymer waste going to landfill.

However, unlike other materials such as glass, wood and metal, the recycling of polymers can be problematic. For example, polymer recycling techniques typically require the polymers to be sorted according to their chemical composition. In particular, due to the diverse array of different commercial polymers it can be difficult to separate polymer materials from the waste stream in this manner. Furthermore, most polymer recycling techniques involve a melt processing stage which can reduce the physical and mechanical properties of the polymer. Recycled polymers therefore tend to have inferior properties and this can limit the range of applications in which they can be employed.

Apart from problems associated with recycling waste polymer materials, the majority of polymers currently being used are derived from petroleum-based products, making their long-term manufacture unsustainable.

In response to these issues, there has been a marked increase in research directed toward developing biodegradable polymers that can at least in part be manufactured using renewable resources. Unlike conventional polymers, biodegradable polymers can be more readily degraded through the action of microorganisms to produce low molecular weight products that present little, if any, environmental concern. Furthermore, through the action of biodegradation the volume occupied by such polymers in waste streams is significantly reduced.

Much of the research to-date in the field of biodegradable polymers has focussed on utilising naturally occurring bio-polymers such as polysaccharides. Perhaps the most widely studied polysaccharide in this regard is starch. Starch is a particularly suitable biopolymer in that it is derived from renewable resources (i.e. plant products), readily available and relatively inexpensive.

In preparing biodegradable polymers, polysaccharide is typically utilised by melt mixing it or a modified form thereof with a suitable biodegradable thermoplastic polymer such as polyester. For example, biodegradable polymer compositions may be prepared by melt mixing polyester with starch, a chemically modified starch and/or thermoplastic starch (TPS - formed by melt mixing starch with a plasticiser such as glycerol). However, polysaccharides such as starch are quite hydrophilic relative to thermoplastic polymers that are typically melt mixed with it. Melt mixing of polysaccharide with other thermoplastic polymers therefore typically results in the formation of multi-phase morphology having a high interfacial tension which can negatively impact on the physical and mechanical properties of the resulting polymer composition.

Considerable research has been devoted to improving the physical and mechanical properties of biodegradable polymer compositions comprising polysaccharide. For example, phase compatibilisers have been employed to reduce the degree of phase separation that can occur when polyester is melt mixed with polysaccharide.

Despite advances in the physical and mechanical properties of biodegradable polymer compositions comprising polysaccharide, such polymer composition are generally still renowned for having inferior physical and mechanical properties relative to petroleum derived polymers.

Furthermore, such polymer compositions also tend to suffer from poor processing behaviour, particularly in their conversion into products such as film or sheet. For example, conventional polyester starch polymer compositions typically exhibit poor processing behaviour during blown film production. In particular, the polymer compositions may be prone to bubble instability, excessive film blocking (i.e. autoadhesion), shear sensitivity of the polymer melt, thermal degradation of the polymer melt, evolution of volatiles, poor melt strength, tackiness of the polymer melt, and a narrow processing window. Such processing problems generally increase scrap rates and reduce output.

Attempts have been made to address such processing problems. For example, slower and gentler processing techniques can be adopted, and specialised processing equipment has been developed. However, such measures either reduce throughput and/or add cost to the manufacturing process.

WO 2008/011668 describes a biodegradable composition comprising a biodegradable polyester (a) a masterbatch, wherein said masterbatch has been formed by mixing a polysaccharide (b), a biodegradable polymer having pendant carboxylic groups (c) and a transesterification acid catalyst (d). Optionally, a lubricant such as a sodium stearate may be added (f) in an amount of 0.2 wt.% to 0.7 wt.%.

WO 2008/037744 relates to a biodegradable multiphase composition comprising starch (b), a polyhydroxyalkalnoate (a) and a polyepoxy (e).

Accordingly, there remains an opportunity to develop new biodegradable polymer compositions comprising polysaccharide which address or ameliorate one or more disadvantages or shortcomings associated with existing compositions and/or their method of manufacture, or to at least provide a useful alternative to such compositions and their method of manufacture.

### SUMMARY OF THE INVENTION

The present invention provides a biodegradable polymer composition comprising the following components (a)-(f) and/or product(s) formed from a reaction between the components: (a) one or more biodegradable polyesters; (b) polysaccharide; (c) polymer having pendant carboxylic acid groups; (d) transesterification catalyst; (e) polyepoxide; and (f) fatty acid sodium salt in an amount to provide for 0.01 wt.% to 0.15 wt.% of the sodium salt in the resulting biodegradable polymer composition.

A polymer composition in accordance with the invention has been found to not only exhibit excellent biodegradability and physical and mechanical properties, but also improved processing behaviour relative to conventional biodegradable polymer compositions comprising polysaccharide.

The invention also provides a method of preparing a biodegradable polymer composition, said method comprising melt mixing a masterbatch and constituents (A) which comprise one or more biodegradable polyesters and polyepoxide, wherein the masterbatch has been formed by melt mixing constituents (B) which comprise one or more biodegradable polyesters, polysaccharide, polymer having pendant carboxylic acid groups, and transesterification catalyst, and wherein constituents (A) and/or (B) further comprise fatty acid sodium salt in an amount to provide for 0.01 wt.% to 0.15 wt.% of the sodium salt in the resulting biodegradable polymer composition.

In one embodiment of the method of the invention, the masterbatch provides the only source of polysaccharide that is melt mixed with other constituents to form the biodegradable polymer composition.

By first preparing the masterbatch by melt mixing constituents (B) and then melt mixing the masterbatch with constituents (A), the method in accordance with the invention is believed to provide for a biodegradable polymer composition that exhibits excellent compatibility between its constituent components.

Without wishing to be limited by theory, it is believed that the polymer having pendant carboxylic acid groups facilitates transesterification between the polysaccharide and the biodegradable polyester during preparation of the masterbatch. Such components within the masterbatch are in turn believed to function as a compatibiliser and reduce the formation of multi-phase morphology when the masterbatch is melt mixed with the constituents (A). A reduction in the multi-phase morphology of the resulting biodegradable polymer composition is believed to contribute to the excellent physical and mechanical properties of the composition.

Without wishing to be limited by theory, use of the polyepoxide and fatty acid sodium salt is believed to promote a further increase in the physical and mechanical properties and/or an improvement in the processing behaviour of the composition. In particular, the polyepoxide is believed to react during melt mixing so as to couple two or more polymer chains present in the melt and thereby increase the effective molecular weight of polymer in the composition. The fatty acid sodium salt is believed to facilitate substantially uniform nucleation and spherulite formation in processed products such as films formed from the polymer composition.

Such transformations in the polymer composition is in turn believed to enhance both the physical and mechanical properties of the polymer composition and its processing behaviour.

The excellent properties of the polymer composition in accordance with the invention can advantageously be obtained with the composition having relatively high polysaccharide content. Further aspects of the invention are described below.

### DETAILED DESCRIPTION OF THE INVENTION

The polymer compositions in accordance with the invention are biodegradable. Those skilled in the art will appreciate that the term "biodegradable" does not have a universal definition. For avoidance of any doubt, the term "biodegradable" used herein in association with the term "polymer", "polymer composition" or specific polymer materials such as a "polysaccharide" and "polyester", is intended to denote a material that meets the biodegradability criteria specified in EN 13432 or ASTM 6400. In other words, the polymer composituion is considered to be biodegradable if, upon exposure to a composting environment, 90% of it disintegrates into particles having an average size of less than 2mm within twelve weeks, and after six months at least 60% of it, in the case of ASTM 6400, or at least 90% of it, in the case of EN 13432, has degraded into carbon dioxide and/or water. In some embodiments, biodegradable polymer compositions in accordance with the invention will meet the more stringent biodegradability criteria set forth in EN 13432.

The individual components that collectively make up the biodegradable polymer composition in accordance with the invention may or may not in their own right meet the biodegradability criteria specified in EN 13432 or ASTM 6400. However, it will be appreciated that at least some of the components must meet the criteria, and collectively the constituents provide for the composition of the invention that meets the criteria. Where a component does not meet the criteria it will be used in an amount that does not prevent the composition as a whole from meeting the criteria.

The biodegradable polymer composition in accordance with the invention comprises components (a)-(f) and/or product(s) formed from a reaction between the components. As will be discussed in more detail below, the polymer composition will generally be provided in the form of a melt mixed product. During formation of the melt mixed product it is believed that one or more components (a)-(f) undergo a chemical reaction and thereby form a reaction product(s). Those skilled in the art will appreciate that it can be difficult to clearly define such a reaction product(s) and therefore the most appropriate way to refer to them is simply as a "reaction product(s)". For example, the polyepoxide (e) may react with the one or more biodegradable polyesters (a) to promote chain coupling thereof and thereby effectively extend the molecular weight of the polyester. All of the components within the composition may not undergo reaction and therefore the composition may comprise a mixture of the original components and reaction product(s) of the components.

There is no particular limitation regarding the polyester that may be used in accordance with the invention provided that it is biodegradable. Examples of suitable biodegradable polyesters include, but are not limited to, polycaprolactone (PCL) as sold by Union Carbide under the trade name Tone™ (e.g. Tone P-300, P-700, P-767 and P-787 having a weight average molecular weight of about 10,000, 40,000, 43,000 and 80,000, respectively), or those sold by Perstorf under the trade name CAPA 6800 and CAPA FB100 having a molecular weight of 80,000 and 100,000 Daltons, respectively; polylactic acid (PLA) as sold under the trade name Natureworks™ PLA by Cargill; polyhydroxy butyrate (PHB) as sold under the trade name Biocycle™ or Biomer™ by Biomer, Germany; polyethylene succinate (PES) and polybutylene succinate (PBS) as sold under the trade name Bionolle™ by Showa Hi Polymer Company, Japan, (e.g. Bionolle™ 1001 (PBS) and Bionelle™ 6000 (PES)); polybutylene adipate (PBA) as sold under the trade name Skygreen™ SG100 from SK Chemicals Korea; poly(butylene adipate/terephthalate) (PBAT) aliphatic/aromatic copolyesters such as Ecoflex™ by BASF, Germany, or EnPOL™ G8060 and EnPOL™ 8000 by Ire Chemical Ltd of Seoul; poly(hydroxybutyrate valerate) (PHBV) by Metabolix Inc. USA; cellulose acetate butyrate (CAB) and cellulose acetate propionate (CAP) supplied by Eastman Chemicals; or combinations thereof.

The biodegradable polyester will generally have a melt flow index (MFI) of less than about 5 g/10 min (190°C at 2.16 kg). For example, the MFI may be less than about 4, less than about 3 or less than about 2 g/10 min (190°C at 2.16kg).

MFI values referred to herein are those determined according to ASTM D 1238 at a temperature of 190°C with a ram weight of 2.16kg.

The polysaccharide used in accordance with the invention may be any polysaccharide that can be subjected to melt mixing. The polysaccharide will generally have a water content below about 1wt.%, for example below about 0.5wt.%. Suitable polysaccharides include, but are not limited to, starch, glycogen, chitosan, cellulose and combinations thereof.

A preferred polysaccharide for use in accordance with the invention is starch. Starch is a particularly convenient polysaccharide in that it is relatively inexpensive, it is derived from a renewable resource and it is readily available. Starch is found chiefly in seeds, fruits, tubers, roots and stem pith of plants, and is basically a polymer made up of repeating glucose groups linked by glucosidic linkages in the 1-4 carbon positions. Starch consists of two types of alpha-D-glucose polymers: amylose, a substantially linear polymer with molecular weight of about 1 x 10⁵; and amylopectin, a highly branched polymer with very high molecular weight of the order 1 x 10⁷. Each repeating glucose unit typically has three free hydroxyl groups, thereby providing the polymer with hydrophilic properties and reactive functional groups. Most starches contain 20 to 30% amylose and 70 to 80% amylopectin. However, depending on the origin of the starch the ratio of amylose to amylopectin can vary significantly. For example, some corn hybrids provide starch with 100% amylopectin (waxy corn starch), or progressively higher amylose content ranging from 50 to 95%. Starch usually has a water content of about 15wt.%. However, the starch can be dried to reduce its water content to below 1%.

Starch typically exists in small granules having a crystallinity ranging from about 15 to 45%. The size of the granules may vary depending upon the origin of the starch. For example, corn starch typically has a particle size diameter ranging from about 5 to 40µm, whereas potato starch typically has a particle size diameter ranging from about 50 to 100µm. In this "native" form, starch can be difficult to melt process. To improve the melt processability of starch, the starch may be converted to a TPS by means well known in the art. Thus, TPS may be used as the polysaccharide in accordance with the invention. For example, native starch may be melt processed with one or more plasticisers such as water, glycerol, maltitol, mannitol, xylitol, erythritol, diethyleneglycol, trimethylene glycol, triethyl citrate (TEC), sorbitol, other low molecular weight polyether compounds and combinations thereof.

Water is an excellent plasticiser for the manufacture of TPS. However, due to its relatively low boiling point, the presence of water above about 1wt.% in TPS can cause an undesirable degree of volatilisation of water during melt mixing. Furthermore, the presence of too much water during the preparation of the masterbatch or biodegradable polymer composition can cause an undesirable degree of hydrolysis of the polyester.

In one embodiment, the plasticisers used for the manufacture of TPS include glycerol and/or sorbitol.

The plasticisers are typically used in an amount ranging from about 5wt.% to about 50wt.%, for example in an amount ranging from about 10wt.% to about 40wt.%, or in an amount ranging from about 15wt.% to about 40wt.%, relative to the total mass of the plasticiser and native starch.

Where a mixture of glycerol and sorbitol plasticisers are used, it is preferable that they are present in a weight ratio ranging from about 2:1 to about 3:1.

Where a plasticiser is present in the biodegradable polymer composition according to the invention, it may or may not in its own right meet the biodegradability criteria specified in EN 13432 or ASTM 6400. However, it will in any event be used in an amount that does not prevent the biodegradable polymer composition according to the invention from meeting such criteria.

Chemically modified starch may also be used as the polysaccharide in accordance with the invention. Chemically modified starch includes, but is not limited to, oxidised starch, etherificated starch, esterified starch, cross-linked starch or a combination of such chemical modifications (e.g., etherificated and esterified starch). Typically, modified starch is prepared by reacting the hydroxyl groups of the polymer with one or more reagents. The degree of reaction, often referred to the degree of substitution (DS), can significantly alter the physicochemical properties of the modified starch compared with the corresponding native starch. The DS for a native starch is designated as 0, and can range up to 3 for a fully substituted modified starch. Where the substituent groups have hydrophobic character, a DS approaching 3 can afford a modified starch that is relatively hydrophobic in character. Such modified starches can be more readily melt blended with the biodegradable polyester, relative to native starch.

A chemically modified starch may also be converted to TPS by melt mixing it with plasticiser as hereinbefore described. In this case, the aforementioned amounts of plasticiser used will be relative to the total mass of the modified starch.

Suitable etherificated starches include, but are not limited to, those which are substituted with ethyl and/or propyl groups. Suitable esterified starches include, but are not limited to, those that are substituted with acetyl, propanoyl and/or butanoyl groups.

Etherificated starches may be prepared using techniques well known in the art, such as reacting starch with an appropriate alkylene oxide. Esterified starches may also be prepared using techniques well known in the art, such as reacting starch with appropriate anhydride, carboxylic acid or acid chloride reagents.

When starch is used as the polysaccharide, it may be in its native form, in the form of a TPS, a chemically modified starch, or a combination such starches may be used. In all cases, it is preferable that the water content is less than about 1wt.%, preferably less than about 0.5wt.%.

It will of course also be possible to form TPS during the melt mixing process used to prepare the masterbatch. For example, the production of the masterbatch may comprise melt mixing native starch and/or chemically modified starch, plasticiser, biodegradable polyester, a polymer having pendant carboxylic acid groups, a transesterification catalyst and optionally fatty acid sodium salt.

Where a TPS is used in preparing the masterbatch and/or a plasticiser per se is used in preparing the masterbatch to form the TPS *in situ,* the presence of plasticiser during the melt mixing process is believed to further enhance the formation and/or retention of a highly non-crystalline or destructured form of the polysaccharide.

Examples of suitable starch materials include, but are not limited to, corn starch, potato starch, wheat starch, soybean starch, tapioca starch, high-amylose starch or combinations thereof.

In some embodiments, the starch is corn starch, and in others the corn starch is corn starch acetate such as that supplied by the Shanghai Denaturalization Starch Company, Shanghai, (DS > 0.08%, moisture content < 14%).

The polysaccharide component of the composition may or may not in its own right meet the biodegradability criteria specified in EN 13432 or ASTM 6400. However, it will in any event be used in an amount that does not prevent the biodegradable polymer composition according to the invention from meeting such criteria.

As used herein, reference to a polymer having "pendant carboxylic acid groups" is intended to mean that the carboxylic acid groups (i.e. -COOH) are present as substituents along the polymeric backbone of a polymer. The acid groups may be attached directly to the polymeric backbone or attached to the backbone by a spacer group such as an alkylene group (e.g. C₁-C₆ alkylene).

In one embodiment, the polymer having pendant carboxylic acid groups is biodegradable. This polymer component of the composition may or may not in its own right meet the biodegradability criteria specified in EN 13432 or ASTM 6400. However, it will in any event be used in an amount that does not prevent the biodegradable polymer composition according to the invention from meeting such criteria.

Suitable types of polymer having pendant carboxylic acid groups that may be used in accordance with the invention include, but are not limited to, ethylene acrylic acid (EAA) copolymer, poly(EAA-vinyl alcohol) (EAAVA), poly(acrylic acid) (PAA), poly(methacrylic acid) (PMA), ethylene-methacrylic acid copolymers (EMAA), poly(acrylamide-acrylic acid) (PAAA), and combinations thereof.

The polymer having pendant carboxylic acid groups will generally have a melt flow index (MFI, as measured at 190°C using 2.16 kg weight) of greater than about 15, preferably ranging from about 15 to about 50, more preferably from about 15 to about 20.

The polymer having pendant carboxylic acid groups will generally have a % acid value (as determined by ASTM D4094-00) of greater than about 7%, preferably greater than or equal to about 9%.

The biodegradable polymer composition in accordance with the invention also comprises a transesterification catalyst. Suitable transesterification catalysts include, but are not limited to, alkali metal hydroxides such as sodium and/or potassium hydroxide. The type of catalyst employed preferably has low ecotoxicity. Antimony based transesterification catalysts will therefore not generally be used. The catalyst may be provided in solution, for example in an aqueous solution.

The transesterification catalyst component of the composition may or may not in its own right meet the biodegradability criteria specified in EN 13432 or ASTM 6400. However, it will in any event be used in an amount that does not prevent the biodegradable polymer composition according to the invention from meeting such criteria.

The biodegradable polymer composition in accordance with the invention further comprises polyepoxide. By "polyepoxide" is meant monomeric or polymeric material having two or more epoxy groups on average per molecule. Provided that the two or more epoxy groups are capable of undergoing reaction with acid and/or alcohol groups of polymers present within the composition, the type of epoxy group is not critical. However, polyepoxides comprising vicinal epoxy groups are generally preferred.

The polyepoxide component of the composition may or may not in its own right meet the biodegradability criteria specified in EN 13432 or ASTM 6400. However, it will in any event be used in an amount that does not prevent the biodegradable polymer composition according to the invention from meeting such criteria.

Suitable polyepoxides include, but are not limited to, diepoxides such as a diglycidyl ether of bisphenol A, butadiene diepoxide, 3,4-epoxycyclohexylmethyl-(3,4-epoxy) cyclohexane-carboxylate, vinyl cyclohexene dioxide, 4,4'-di(1,2-epoxyethyl)-diphenyl ether, 4,4'-(1,2-epoxyethyl) biphenyl, 2,2-bis(3,4-epoxycyclohexyl) propane, a diglycidyl ether of resorcinol, a diglycidyl ether of phloroglucinol, a diglycidyl ether of methylphloroglucinol, bis(2,3-epoxycyclopentyl) ether, 2-(3,4-epoxy) cyclohexane-5,5 spiro(3,4-epoxy)-cyclohexane-m-dioxane and bis(3,4-epoxy-6-methylcyclohexyl)adipate, N,N'-m-phenylene-bis (4,5-epoxy-1,2-cyclohexanedicarboxyimide), and tri-and higher epoxides such as a triglycidyl ether of p-aminophenol, polyallylglycidyl ether, 1,3,5-tri(1,2-epoxyethyl) benzene, 2,2',4,4'-tetraglycidoxybenzophenone, tetraglycidoxytetraphenylethane, a polyglycidyl ether of phenol-formaldehyde novolac, a triglycidyl ether of glycerin, a triglycidyl ether of trimethylolpropane, poly glycidyl (meth) acrylate oligomers and (co) polymers, and combinations thereof.

Preferred polyepoxides are those formed through the polymerisation of glycidyl methacrylate (GMA). The GMA may be homopolymerised or copolymerised with one or more other monomers. For example, the GMA based polyepoxide may be a multi-functional styrene-acrylic oligomer having a molecular weight (Mw) of less than about 7,000 and having general formula (I): 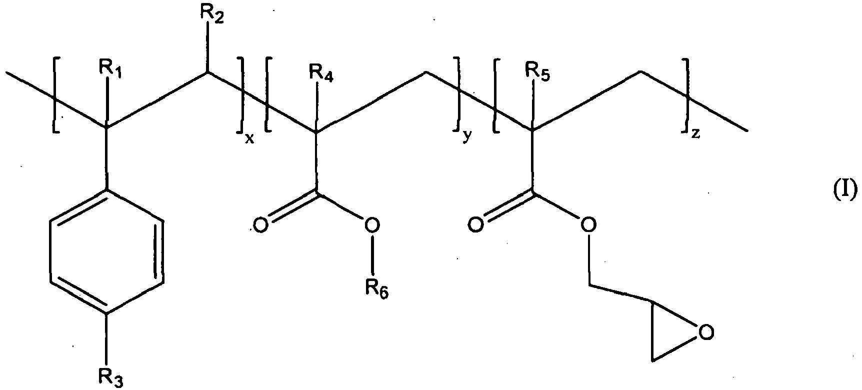 where R₁-R₅ are each independently selected from H and alkyl (e.g. C₁-C₁₂ alkyl), R₆ is an alkyl group (e.g. C₁-C₁₂ alkyl), and x, y and z are each independently an integer between 1 and 20.

Suitable GMA derived polyepoxides may be obtained commercially, for example, Joncryl^{®} ADR-4368 by BASF.

The biodegradable polymer composition in accordance with the invention also comprises fatty acid sodium salt. By "fatty acid sodium salt" is meant a fatty acid in which the carboxylic acid functional group is in the form of its sodium salt. By "fatty acid" is meant a carboxylic acid tethered to a carbon chain of at least 10 carbon atoms. For example, the fatty acid sodium salt may be a C₁₀₋₄₅ fatty acid sodium salt. The fatty acid sodium salt may comprise a mixture of different fatty chain lengths. The fatty chain of the fatty acid sodium salt may be saturated or unsaturated. Specific examples of fatty acids from which the fatty acid sodium salt may be derived include, but are not limited to, capric acid (C10), lauric acid (C12), myristic acid (C14), palmitic acid (C16), margaric acid (C17), stearic acid (C18), arachidic acid (C20), behenic acid (C22), lignoceric acid (C24), cerotic acid (C26), montanic acid (C28), and melissic acid (C30), including branched and substituted derivatives thereof. A preferred fatty acid sodium salt is sodium stearate.

Use of the fatty acid sodium salt in the composition is believed to facilitate substantially uniform nucleation and spherulite formation in products such as films formed from the polymer composition. Without wishing to be limited by theory, it is believed that sodium ions associated with the fatty acid sodium salt react with carboxylic acid groups of polyester within the composition to produce sodium carboxylate groups. The sodium carboxylate groups are believed to aggregate within the composition and promote nucleation and spherulite formation.

The fatty acid sodium salt component of the composition may or may not in its own right meet the biodegradability criteria specified in EN 13432 or ASTM 6400. However, it will in any event be used in an amount that does not prevent the biodegradable polymer composition according to the invention from meeting such criteria.

As will be discussed in more detail below, the biodegradable polymer composition in accordance with the invention may also contain one or more other components. However, the polymer composition will generally have in total at least about 50wt.%, for example at least about 65wt.%, at least about 75wt.%, or at least about 85wt.%, of components (a)-(f) described above and/or product(s) formed from a reaction between such components.

The biodegradable polymer composition will generally comprise components (a)-(f) and/or product(s) formed form a reaction between the components in a range of from about 20wt.% to about 80wt.% of (a), about 2wt.% to about 60wt.% of (b), about 0.3 to about 25wt.% of (c), about 0.005 to about 0.475wt.% of (d), about 0.1 to about 1wt.% of (e), and about 0.01 to about 0.5wt.% of (f), relative to the total mass of (a)-(f), and such that the total mass of these components represents at least about 50wt.%, about 65wt.%, about 75wt.%, or about 85wt.% of the total mass of the biodegradable polymer composition.

In some embodiments, the polysaccharide (b) used in accordance with the invention may be present in the form of TPS. In that case, the biodegradable polymer composition will also comprise one or more plasticisers in an amount of up to about 25wt.%.

In one embodiment, the biodegradable polymer composition comprises components (a)-(f) and/or product(s) formed from a reaction between the components in a range of from about 30wt.% to about 80wt.% of (a), about 5wt.% to about 40wt.% of (b), about 0.75wt.% to about 15wt.% of (c), about 0.0075wt.% to about 0.3wt.% of (d), about 0.1wt.% to about 0.7wt.% of (e), about 0.025wt.% to about 0.3wt.% of (f), and 0wt.% to about 25wt.% of plasticiser, relative to the total mass of (a)-(f) and plasticiser (when present), and such that the total mass of these components represents at least about 50wt.%, about 65wt.%, about 75wt.%, or about 85wt.% of the total mass of the biodegradable polymer composition.

In a further embodiment, the biodegradable polymer composition comprises components (a)-(f) and/or product(s) formed form a reaction between the components in a range of from about 40wt.% to about 80wt.% of (a), about 5wt.% to about 30wt.% of (b), about 1wt.% to about 8wt.% of (c), about 0.01wt.% to about 0.15wt.% of (d), about 0.2wt.% to about 0.5wt.% of (e), about 0.025wt.% to about 0.15wt.% of (f), and 0 to about 15wt.% of plasticiser, relative to the total mass of (a)-(f) and plasticiser (when present), and such that the total mass of these components represents at least about 50wt.%, about 65wt.%, about 75wt.%, or about 85wt.% of the total mass of the biodegradable polymer composition.

The biodegradable polymer composition in accordance with the invention will generally be provided in the form of a melt mixed product.

In accordance with the invention, the biodegradable polymer composition is prepared by a method comprising melt mixing a masterbatch and constituents (A) which comprise one or more biodegradable polyesters and polyepoxide. Constituents (A) may optionally further comprise fatty acid sodium salt.

Melt mixing may be performed using techniques and equipment well known in the art. For example, melt mixing may be achieved using continuous extrusion equipment such as twin screw extruders, single screw extruders, other multiple screw extruders or Farell continuous mixers. Melt mixing is conducted for sufficient time and at a suitable temperature to promote intimate blending between constituents (A) and the masterbatch. Those skilled in the art will appreciate that melt mixing is generally performed within a suitable temperature range and that this range will vary depending upon the nature of the components being melt mixed.

Melt mixing that is performed in accordance with the invention will generally promote reaction between the components being melt mixed. The melt mixing process might therefore also be described as reactive melt mixing, for example reactive extrusion.

Generally, the biodegradable polymer composition will be prepared by melt mixing together about 10wt.% to about 95wt.% of the masterbatch, about 5wt.% to about 90wt.% of one or more biodegradable polyesters, about 0.1wt.% to about 1wt.% of polyepoxide, and 0wt.% to about 0.5wt.% of fatty acid sodium salt, relative to the total amount of these components, and such that (i) the total mass of these components represents at least about 50wt.%, about 65wt.%, about 75wt.%, or about 85wt.% of the total mass of the resulting biodegradable polymer composition, and (ii) the total mass of fatty acid sodium salt in the resulting biodegradable polymer composition ranges from about 0.01wt.% to about 0.5wt.%.

In one embodiment, the biodegradable polymer composition will be prepared by melt mixing together about 10wt.% to about 90wt.% of the masterbatch, about 5wt.% to about 85wt.% of one or more biodegradable polyesters, about 0.1wt.% to about 1wt.% of polyepoxide, and 0wt.% to about 0.5wt.% of fatty acid sodium salt, relative to the total amount of these components, and such that (i) the total mass of these components represents at least about 50wt.%, about 65wt.%, about 75wt.%, or about 85wt.% of the total mass of the resulting biodegradable polymer composition, and (ii) the total mass of fatty acid sodium salt in the resulting biodegradable polymer composition ranges from about 0.01wt.% to about 0.5wt.%.

In a further embodiment, the biodegradable polymer composition is prepared by melt mixing together about 15wt.% to about 70wt.% of the masterbatch, about 30wt.% to about 90wt.% of one or more biodegradable polyesters, about 0.1wt.% to about 0.7wt.% of polyepoxide, and 0wt.% to about 0.3wt.% of the fatty acid sodium salt, relative to the total amount of these components, and such that (i) the total mass of these components represents at least about 50wt.%, about 65wt.%, about 75wt.%, or about 85wt.% of the total mass of the resulting biodegradable polymer composition, and (ii) the total mass of fatty acid sodium salt in the resulting biodegradable polymer composition ranges from about 0.025wt.% to about 0.3wt.%.

In another embodiment, the biodegradable polymer composition is prepared by melt mixing together about 15wt.% to about 65wt.% of the masterbatch, about 30wt.% to about 80wt.% of one or more biodegradable polyesters, about 0.1wt.% to about 0.7wt.% of polyepoxide, and 0wt.% to about 0.3wt.% of the fatty acid sodium salt, relative to the total amount of these components, and such that (i) the total mass of these components represents at least about 50wt.%, about 65wt.%, about 75wt.%, or about 85wt.% of the total mass of the resulting biodegradable polymer composition, and (ii) the total mass of fatty acid sodium salt in the resulting biodegradable polymer composition ranges from about 0.025wt.% to about 0.3wt.%.

In a further embodiment, the biodegradable polymer composition is prepared by melt mixing together about 20wt.% to about 50wt.% of the masterbatch, about 40wt.% to about 80wt.% of one or more biodegradable polyesters, about 0.2wt.% to about 0.5wt.% of polyepoxide, and 0wt.% to about 0.15wt.% of fatty acid sodium salt, relative to the total amount of these components, and such that (i) the total mass of these components represents at least about 50wt.%, about 65wt.%, about 75wt.%, or about 85wt.% of the total mass of the resulting biodegradable polymer composition, and (ii) the total mass of fatty acid sodium salt in the resulting biodegradable polymer composition ranges from about 0.025wt.% to about 0.15wt.%.

In still a further embodiment, the biodegradable polymer composition is prepared by melt mixing together about 20wt.% to about 50wt.% of the masterbatch, about 40wt.% to about 75wt.% of one or more biodegradable polyesters, about 0.2wt.% to about 0.5wt.% of polyepoxide, and 0wt.% to about 0.15wt.% of fatty acid sodium salt, relative to the total amount of these components, and such that (i) the total mass of these components represents at least about 50wt.%, about 65wt.%, about 75wt.%, or about 85wt.% of the total mass of the resulting biodegradable polymer composition, and (ii) the total mass of fatty acid sodium salt in the resulting biodegradable polymer composition ranges from about 0.025wt.% to about 0.15wt.%.

In addition to constituents (A) described above (i.e. the one or more biodegradable polyesters and polyepoxide, and when present the fatty acid sodium salt), the masterbatch may be melt mixed with one or more further components such as polysaccharide, plasticiser, and/or one or more other components such as the additives outlined below. Where such other components are present in the composition it will be appreciated that the percentage values defined herein will be appropriately adjusted to allow for these components.

As used herein, the term "masterbatch" is intended to mean a polymer composition formed by melt mixing constituents (B) which comprise one or more biodegradable polyesters, polysaccharide, polymer having pendant carboxylic acid groups, transesterification catalyst, and optionally fatty acid sodium salt as herein described. Constituents (B) may comprise one or more further components such as the additives outlined below. In that case, the intended meaning of the term "masterbatch" will of course be extended to include these other components.

The masterbatch is formed in advance of it being melt mixed with constituents (A).

By first forming the masterbatch comprising the polysaccharide and then melt mixing it with constituents (A) it has been found that the resulting biodegradable polymer composition may be prepared using a minimum melt mixing temperature while still achieving excellent compatibilisation of components present in the composition.

By the expression "minimum melt mixing temperature" is meant the lowest temperature or temperature range at which the composition can be maintained to enable it to be effectively melt mixed while minimising or avoiding thermal degradation of components within the composition. The minimum melt mixing temperature will of course vary depending upon the materials being mixed, and this can be readily determined by a person skilled in the art.

Being able to prepare the composition at a minimum melt processing temperature advantageously minimises thermal degradation of the components of the composition.

Under certain circumstances, it may be desirable to vent or apply vacuum to the melt mixing process to allow volatile components such as water to be removed from the polymer melt.

During melt mixing of the masterbatch with constituents (A), the polyepoxide is believed to react with carboxylic acid and/or alcohol groups of the polymers present. This reaction can couple polymer chains so as to increase the effective molecular weight of the polymer. An increase in the molecular weight of the polymer is in turn believed to enhance the physical and mechanical properties of the resulting biodegradable polymer composition. Furthermore, the increased molecular weight of the polymer composition is believed to improve its melt processing properties, and in particular melt processing properties associated with producing blown film from the composition.

In accordance with the method of the invention, the masterbatch is formed by melt mixing constituents (B) which comprise one or more biodegradable polyesters, polysaccharide, polymer having pendant carboxylic acid groups, transesterification catalyst, and optionally fatty acid sodium salt. Melt mixing may be performed using equipment and techniques outlined above.

The masterbatch may be prepared and conveniently stored for future use. Alternatively, the masterbatch may be prepared and then immediately combined with constituents (A) in the melt mixing process used to prepare the biodegradable polymer composition.

In a similar manner to that discussed above in respect of the biodegradable polymer composition, the masterbatch comprises constituents (B) and/or product(s) formed from a reaction between the constituents. In particular, the melt mixing process used to be prepare the masterbatch is believed to promote reaction between at least some of the polysaccharide and the one or more biodegradable polyesters. Without wishing to be limited by theory, it is believed that the polysaccharide will undergo a degree of transesterification with the one or more biodegradable polyesters. The polymer having pendant carboxylic acid groups may also take part in such reactions. Accordingly, the masterbatch may be described as comprising constituents (B), optionally fatty acid sodium salt, and/or product(s) formed from a reaction between such constituents.

Without wishing to be limited by theory, the transesterification catalyst used in preparing the masterbatch is believed to provide a function that lowers the melt processing temperature at which the masterbatch constituents may be melt mixed and undergo reaction compared with that which would be required to promote the same degree of reaction in the absence of the catalyst. While the catalyst is referred to as a "transesterification" catalyst, those skilled in the art will appreciate from the nature of the constituents being melt mixed to prepare the masterbatch that other reactions such as condensation and ester exchange reactions may also take place. Thus, it is to be understood that reference herein to the term "transesterification" is intended to embrace other mechanisms of reaction that can occur between ester, alcohol and acid groups such as ester exchange and condensation reactions.

Those skilled in the art will also appreciate that transesterification between the polysaccharide and the one or more biodegradable polyesters or the polymer having pendant carboxylic acid groups will typically result in the formation of a block co-polymer. The block co-polymer(s) may function as a compatibiliser for any polysaccharide, biodegradable polyester and polymer having pendant carboxylic acid groups that have not undergone transesterification. Thus, irrespective of whether only part or all of the polysaccharide undergoes transesterification with the biodegradable polyester and/or the polymer having pendant carboxylic acid groups, the masterbatch is believed to present as a relatively homogenous composition at least in terms of these three components.

As a compatibiliser, the block co-polymer(s) formed during preparation of the masterbatch can be seen to comprise a section(s) or region(s) that is miscible with the polysaccharide and a section(s) or region(s) that is miscible with the biodegradable polyester and/or the polymer having pendant carboxylic acid groups. The block co-polymer(s) can therefore function to decrease the interfacial tension between and promote the coupling of immiscible polysaccharide and polyester phases that may be present in the masterbatch or the biodegradable polymer composition formed from using the masterbatch.

Use of the polymer having pendant carboxylic acid groups is believed to promote the formation of such block co-polymers, which in turn are believed to improve the compatibility between constituent components of the biodegradable polymer composition of the invention.

The masterbatch is therefore believed to comprise a highly compatibilised mixture and/or a product(s) formed from a reaction between the constituent components thereof. Melt mixing constituents (A) with the masterbatch to provide for the biodegradable polymer composition has been found to promote a higher degree of compatibilisation of all components present compared with melt mixing a mere admixture of the components in the masterbatch (i.e. constituents (B)) with constituents (A).

Compatibilisation of the components present in the masterbatch or the biodegradable polymer composition *per se* may be readily determined experimentally by imaging the composition and/or by measuring the physical and mechanical properties of the composition. For example, the masterbatch or biodegradable polymer composition may be cryogenically frozen, fractured then viewed under a scanning electron microscope to evaluate the level of adhesion between the dispersed phase and the continuous phase.

Generally, the masterbatch will be prepared by melt mixing together about 5wt.% to about 50wt.% one or more biodegradable polyesters, about 20wt.% to about 70wt.% polysaccharide, about 3wt.% to about 30wt.% polymer having pendant carboxylic acid groups, about 0.05wt.% to about 0.5wt.% transesterification catalyst, and optionally 0wt.% to about 0.53wt.% fatty acid sodium salt, relative to the total mass of these components, and such that the total mass of these components represents at least about 50wt.%, about 65wt.%, about 75wt.%, or about 85wt.% of the total mass of the masterbatch.

Where the polysaccharide component of the masterbatch is to be in the form of TPS, preformed TPS may be used or the TPS may be conveniently *formed in situ* as part of the process of preparing the masterbatch. In the case where the TPS is formed *in situ* during preparation of the masterbatch, a plasticiser in an amount of from about 5wt.% to about 50wt.%, relative to the combined mass of starch and plasticiser, will be melt mixed together with the other constituents. When used, the plasticiser will generally be present in the resulting masterbatch in amount of no more than about 35wt.%.

In one embodiment, the masterbatch is prepared by melt mixing together about 5wt.% to about 40wt.% one or more biodegradable polyesters, about 25wt.% to about 60wt.% polysaccharide, about 5wt.% to about 25wt.% polymer having pendant carboxylic acid groups, about 0.05wt.% to about 0.4wt.% transesterification catalyst, 0wt.% to about 0.375wt.% fatty acid sodium salt, and 0wt.% to about 35wt.% plasticiser, relative to the total mass of these components, and such that the total mass of these components represents at least about 50wt.%, about 65wt.%, about 75wt.%, or about 85wt.% of the total mass of the masterbatch.

In a further embodiment the masterbatch may be prepared by melt mixing together about 5wt.% to about 30wt.% one or more biodegradable polyesters, about 30wt.% to about 55wt.% polysaccharide, about 5wt.% to about 15wt.% polymer having pendant carboxylic acid groups, about 0.05wt.% to about 0.30wt.% transesterification catalyst, 0wt.% to about 0.3wt.% fatty acid sodium salt, and 0wt.% to about 30wt.% plasticiser, relative to the total mass of these components, and such that the total mass of these components represents at least about 50wt.%, about 65wt.%, about 75wt.%, or about 85wt.% of the total mass of the masterbatch.

In accordance with the method of preparing the biodegradable polymer composition, it will be appreciated that the fatty acid sodium salt may be present in the masterbatch and/or melt mixed as a separate entity with the masterbatch. Regardless of its origin, the total amount of fatty acid sodium salt used in accordance with the method will range from 0.01 wt.% to 0.15wt.%.

Where the polysaccharide used in accordance with the invention is starch, the starch will generally be in the form of TPS. In accordance with the method of the invention, the TPS will generally form part of the masterbatch, and the masterbatch may be prepared using TPS or the TPS may be *formed in situ* during preparation of the masterbatch. In either case, the masterbatch will generally comprise about 5wt.% to about 35wt.%, about 10wt.% to about 30wt.%, or about 15wt.% to about 30wt.% plasticiser, relative to the total mass of the masterbatch.

In one embodiment, the masterbatch provides the only source of polysaccharide that is used to prepare the biodegradable polymer composition. Incorporating the polysaccharide only in the masterbatch has been found to maximise the ability to attain a highly compatibilised composition of the resulting biodegradable polymer. This in turn is believed to impart improved physical and mechanical properties to the composition. Although less preferred, the method of preparing the biodegradable polymer composition may comprise melt mixing the masterbatch and constituents (A) which further comprise polysaccharide. In that case, the polysaccharide will generally be used in amount of no more than about 15wt.%, no more than about 10wt.% or no more than about 5wt.%, relative to the total mass of the components being melt mixed.

The biodegradable polymer composition or the constituents used in the method of preparing the composition may further comprise one or more additives provided that such additives do not adversely impact on the biodegradability of the polymer composition. The additives may include fillers such as calcium carbonate, silicon dioxide, talc, clays such as montmorillonite, titanium dioxide and natural fibres such as wood powder, paper pulp and/or other cellulosic materials; pigments; anti-static agents; stabilisers; additional polymer material such as ethylene vinyl acetate (EVA); blowing agents; processing aids such as lubricants; fluidity enhancers; anti-retrogradation additives; plasticisers as hereinbefore described; and antiblocking agents such as silicon dioxide.

Additional polymer material such as ethylene vinyl acetate may be included in the biodegradable polymer composition. Those skilled in the art will appreciate that ethylene vinyl acetate is a copolymer of ethylene and vinyl acetate. The weight percent of vinyl acetate residue in the copolymer will generally range from about 10wt.% to about 40wt.%, with the remainder being ethylene residue. When used, an additional polymer material such as ethylene vinyl acetate will generally be present in an amount ranging from about 0.5wt.% to about 4wt.% in the biodegradable polymer composition. An additional polymer material such as ethylene vinyl acetate will generally form part of the masterbatch composition that used in preparing the biodegradable polymer composition. In that case, the masterbatch may be prepared so as to comprise about 1wt.% to about 8wt.% of the polymer.

Suitable lubricants include, but are not limited to, calcium stearate, steric acid, magnesium stearate, oxidised polyethylene, oleamide, stearamide and erucamide. When used, a lubricant will generally be present in an amount ranging from about 0.2wt.% to 0.7wt.% in the biodegradable polymer composition.

Suitable fluidity enhancers include, but are not limited to, monoglycerides, glucose fat diethylene glycol dinitrate and products sold under the trade name Siben-60 or Siben-80. When used, a fluidity enhancer will generally be present in an amount ranging from about 1wt.% to about 2wt.% in the biodegradable polymer composition.

A suitable anti-retrogradation additive includes, but is not limited to, a distilled monoglyceride such as glycerol monostearate (GMS). When used, anti-retrogradation additives will generally be present in an amount ranging from about 0.5wt.% to about 4wt.% in the biodegradable polymer composition. An additive such as distilled monoglyceride is also believed to assist with the dispersability and stabilisation of the polysaccharide.

When used, an antiblocking agent such as silicon dioxide will generally be present in an amount ranging from about 0.25wt.% to 0.5wt.% in the biodegradable polymer composition.

The biodegradable polymer composition prepared in accordance with the invention has excellent physical and mechanical properties and is readily biodegradable. The composition can be conveniently processed using conventional polymer converting techniques such as extrusion, injection moulding, and thermoforming. The composition is particularly suited for manufacturing film and sheet that may be converted into packaging materials. In this case, PCL, PBAT, PHBV, PES and PBS are preferably used as the biodegradable polyester.

The invention also provides a sheet or film formed from the biodegradable polymer composition prepared in accordance with the invention.

The biodegradable polymer composition may be provided in any suitable form that can be processed into a desired product such as sheet or film. Generally, the composition will be provided in the form of pellets.

Embodiments of the invention are further described with reference to the following nonlimiting examples.

### EXAMPLES:

### EXAMPLE 1: Preparation of masterbatch

35kg of acetic ester starch (DS of 0.5) having a water content of less than 1wt.%, 8.5kg poly(butylene adipate/terephthalate (PBAT), 14kg of glycerol, 6kg of sorbitol, 1.2kg of distilled monoglyceride (GMS), 6kg of ethylene acrylic acid (EAA) (9% acid, melt flow index = 20), 3kg ethylene vinyl acetate (EVA), 0.2kg sodium stearate and 0.12kg sodium hydroxide dissolved in a minimum amount of water were melt mixed in a ZSK-65 Twin Screw Extruder (L/D = 48). Prior to melt mixing these components, the solid materials were dry blended first in a high speed mixer and the liquid materials then added to provide for a uniform distribution of all components. The temperature profile of the extruder was set at 100°C/130°C/160°C/160°C/150°C/140°C. The rotation speed of the screw was set at 300 rpm. A vacuum of -0.06 to -0.08 bar was applied during extrusion. The polymer melt was extruded as a strand, air cooled and cut into pellets. The masterbatch was found to have a melt flow index of > 4g/10min at 190°C with 2.16kg, and a water content of <0.2wt.%.

### EXAMPLE 2: Preparation of a Biodegradable Polymer Composition

A composition consisting of 30wt.% of the masterbatch prepared in Example 1, , 52.7wt.% PBAT, 7wt.% polycaprolactone (PCL), 3 wt% polylactic acid (PLA), 2wt% GMS, 0.3wt.% polyepoxide (Joncryl^{®} ADR-4368) and 5wt% talc was first dry blended and then melt mixed using a ZSK-65 Twin Screw Extruder with a rotational speed of 200 rpm. The temperature profile of the extruder was set at 80°C/130°C/170°C/170°C/160°C/130°C. A vacuum of -0.04 to -0.05 bar was applied during extrusion. The resulting extrudate was water cooled and cut into pellets and was found to have a melt flow index of 7g/10min, at 190°C with 2.16kg.

The polymer composition prepared in accordance with Example 2 was blown into 20 micron thick film on a standard LDPE blown film line using the processing condition tabulated below.

### Processing Conditions - Film Blowing

| | |
|---|---|
| **Extruder Speed** | 40 rpm |
| **Line Speed** | 50 m/min |
| **Bubble Height** | 4.5 m |
| **Blow-up Ratio** | 3:1 |

### Temperature Profile of Extrusion Line

| **Zone** | **Temperature (°C)** |
|---|---|
| Hopper | 10-25, water cooling |
| Feed | 135 |
| Compression | 145 |
| Metering/mixing | 150 |
| Adaptors | 150 |
| Die | 150 |

Bubble cooling was gradually changed from weak to strong. Chilled air at aboout 10-15°C worked best to avoid film blocking problems. The preferred blow-up ratios were between 2.5:1 and 3.5:1 higher blow-up ratios may lead to bubble instability problems and film creasing. Depending on equipment design and set-up film thicknesses between 15 µm and 120 µm were achieved using the composition.

The resulting film was tested according to ASTM D-882 and found to exhibit a tensile strength at break of >15 MPa and an elongation at break of >600%. The film was also found to fully comply with the biodegradability requirements of EN 13432.

In comparison, a range of films formed from comparative commercially available polysaccharide/polyester polymer compositions sold under the trade name BioCorp™, EcoWorks™ and Eco Film™ were found to have an elongation at break when tested in accordance with ASTM D-882 of only ∼400%.

## Claims

1. A biodegradable polymer composition comprising the following components (a)-(f) and/or product(s) formed from a reaction between the components:
(a) one or more biodegradable polyesters;
(b) polysaccharide;
(c) polymer having pendant carboxylic acid groups;
(d) transesterification catalyst, said transesterification catalyst preferably is an alkali metal hydroxide;
(e) polyepoxide; and
(f) 0.01 wt.% to 0.15 wt.% of fatty acid sodium salt relative to the total mass of the biodegradable composition, said fatty acid sodium salt preferably is sodium stearate.

2. The biodegradable polymer composition according to claim 1, wherein the one or more biodegradable polyesters are each independently selected from polycaprolactone, polylactic acid, polyhydroxy butyrate, polyethylene succinate, polybutylene adipate terephthate, polyhydroxy butyrate valerate, polybutylene succinate, polybutylene adipate, cellulose acetate butyrate, cellulose acetate propionate and combinations thereof.

3. The biodegradable polymer composition according to claim 1 or 2, wherein the polysaccharide is selected from starch, glycogen, chitosan, cellulose and combinations thereof, preferably wherein the polysaccharide is starch, said starch preferably is in the form of thermoplastic starch (TPS).

4. The biodegradable polymer composition according to claim 3, wherein the thermoplastic starch (TPS) comprises a plasticiser selected from glycerol, maltitol, mannitol, xylitol, erythritol, diethyleneglycol, trimethylene glycol, triethyl citrate (TEC), sorbitol and combinations thereof.

5. The biodegradable polymer composition according to any one of claims 1 to 4, wherein the polymer having pendant carboxylic acid groups is selected from ethylene acrylic acid copolymer, poly(ethylene acrylic acid- vinyl alcohol), poly(acrylic acid), poly(methacrylic acid), ethylene-methacrylic acid copolymers, poly(acrylamide-acrylic acid) and combinations thereof, preferably wherein the polymer having pendant carboxylic acid groups is ethylene acrylic acid copolymer.

6. The biodegradable polymer composition according to any one of claims 1 to 5, wherein the polyepoxide is selected from diglycidyl ether of bisphenol A, butadiene diepoxide, 3,4-epoxycyclohexylmethyl-(3,4-epoxy) cyclohexane-carboxylate, vinyl cyclohexene dioxide, 4,4'-di(1,2-epoxyethyl)-diphenyl ether, 4,4'-(1,2-epoxyethyl) biphenyl, 2,2-bis(3,4-epoxycyclohexyl) propane, diglycidyl ether of resorcinol, diglycidyl ether of phloroglucinol, diglycidyl ether of methylphloroglucinol, bis(2,3-epoxycyclopentyl) ether, 2-(3,4-epoxy) cyclohexane-5,5-spiro(3,4-epoxy)-cyclohexane-m- dioxane, bis(3,4-epoxy-6-methylcyclohexyl)adipate, N,N'-m-phenylene-bis (4,5-epoxy-1 ,2-cyclohexanedicarboxyimide), triglycidyl ether of p-aminophenol, polyallylglycidyl ether, 1,3,5-tri(1, 2-epoxyethyl) benzene, 2,2',4,4'-tetraglycidoxybenzophenone, tetraglycidoxytetraphenylethane, polyglycidyl ether of phenol-formaldehyde novolac, triglycidyl ether of glycerin, triglycidyl ether of trimethylolpropane, poly glycidyl (meth) acrylate oligomers and (co) polymers, and combinations thereof.

7. The biodegradable polymer composition according to any one of claims 1 to 6, wherein the composition comprises components (a)-(f) and/or product(s) formed form a reaction between the components in a range of
- from about 40wt.% to about 80wt.% of (a);
- 5wt.% to 30wt.% of (b);
- 1wt.% to 8wt.% of (c);
- 0.01wt.% to 0.15 wt.% of (d);
- 0.2wt.% to 0.5wt.% of (e); and
- 0.025wt.% to 0.15wt.% of (f), relative to the total mass of (a)-(f), and such that the total mass of these components represents at least about 50wt.% of the total mass of the biodegradable polymer composition.

8. The biodegradable polymer composition according to claim 6, wherein the polysaccharide is in the form of thermoplastic starch (TPS) comprising a plasticiser selected from glycerol, maltitol, mannitol, xylitol, erythritol, diethyleneglycol, trimethylene glycol, triethyl citrate (TEC), sorbitol and combinations thereof, and wherein the plasticiser is present in an amount of up to 25wt.% relative to the total mass of the composition.

9. The biodegradable polymer composition according to any one of claims 1 to 8 which meets biodegradability criteria set forth in EN 13432.

10. A sheet of film formed from a biodegradable polymer composition according to any one of claims 1 to 9.

11. A method of preparing a biodegradable polymer composition, said method comprising melt mixing together a masterbatch and constituents (A) which comprise one or more biodegradable polyesters and polyepoxide, wherein the masterbatch has been formed by melt mixing together constituents (B) which comprise one or more biodegradable polyesters, polysaccharide, polymer having pendant carboxylic acid groups, and transesterification catalyst, and wherein constituents (A) and/or (B) further comprise fatty acid sodium salt in an amount to provide for 0.01wt.% to 0.15wt.% of the sodium salt in the resulting biodegradable polymer composition.

12. The method according to claim 11, wherein the masterbatch provides the only source of polysaccharide that is melt mixed with constituents A to form the biodegradable polymer composition.

13. The method according to claim 11 or 12, wherein the biodegradable polymer composition is prepared by melt mixing together:
- 20wt.% to 50wt.% of the masterbatch;
- 40wt.% to 80wt.% of one or more biodegradable polyesters;
- 0.2wt.% to 0.5wt.% of polyepoxide; and
- 0wt.% to 0.15wt.% of fatty acid sodium salt;
relative to the total amount of these components, and such that (i) the total mass of these components represents at least 50wt.% of the total mass of the resulting biodegradable polymer composition, and (ii) the total mass of fatty acid sodium salt in the resulting biodegradable polymer composition ranges from 0.025wt.% to 0.15wt.%.

14. The method according to any one of claims 11 to 13, wherein the masterbatch is prepared by melt mixing together
- 5wt.% to 30wt.% one or more biodegradable polyesters;
- 30wt.% to 55wt.% polysaccharide;
- 5wt.% to 15wt.% polymer having pendant carboxylic acid groups;
- 0.05wt.% to 0.3wt.% transesterification catalyst; and
- 0wt.% to 0.3wt.% fatty acid sodium salt;
relative to the total mass of these components, and such that the total mass of these components represents at least 50wt.% of the total mass of the masterbatch.

15. The method according to any one of claims 11 to 14, wherein the one or more biodegradable polyesters are each independently selected from polycaprolactone, polylactic acid, polyhydroxy butyrate, polyethylene succinate, polybutylene adipate terephthate, polyhydroxy butyrate valerate, polybutylene succinate, polybutylene adipate, cellulose acetate butyrate, cellulose acetate propionate and combinations thereof, wherein the polysaccharide is starch, wherein the polymer having pendant carboxylic acid groups is ethylene acrylic acid copolymer, wherein the transesterification catalyst is an alkali metal hydroxide, wherein the polyepoxide is selected from diglycidyl ether of bisphenol A, butadiene diepoxide, 3,4-epoxycyclohexylmethyl-(3,4-epoxy) cyclohexane-carboxylate, vinyl cyclohexene dioxide, 4,4'-di(1,2-epoxyethyl)-diphenyl ether, 4,4'-(1,2-epoxy ethyl) biphenyl, 2,2-bis(3,4-epoxycyclohexyl) propane, diglycidyl ether of resorcinol, diglycidyl ether of phloroglucinol, diglycidyl ether of methylphloroglucinol, bis(2,3- epoxycyclopentyl) ether, 2-(3,4-epoxy) cyclohexane-5,5-spiro(3,4-epoxy)-cyclohexane-m-dioxane, bis(3,4-epoxy-6-methylcyclohexyl)adipate, N,N'-m-phenylene-bis (4,5-epoxy- 1,2-cyclohexanedicarboxyimide), triglycidyl ether of p-aminophenol, polyallylglycidyl ether, 1,3,5-tri(1,2-epoxyethyl) benzene, 2,2',4,4'-tetraglycidoxybenzophenone, tetraglycidoxytetraphenylethane, polyglycidyl ether of phenol-formaldehyde novolac, triglycidyl ether of glycerin, triglycidyl ether of trimethylolpropane, poly glycidyl (meth) acrylate oligomers and (co) polymers, and combinations thereof, and wherein the fatty acid sodium salt is sodium stearate.

## Patentansprüche

1. Biologisch abbaubare Polymerzusammensetzung mit den folgenden Bestandteilen (a) - (f) und/oder (einem) Produkt(en), das/die aus einer Reaktion zwischen den folgenden Bestandteilen gebildet wird/werden:
(a) einem oder mehreren biologisch abbaubaren Polyestern;
(b) Polysaccharid;
(c) Polymer mit Karbonsäure-Seitenketten;
(d) Umesterungskatalysator, wobei der Umesterungskatalysator vorzugsweise ein Alkalimetallhydroxid ist;
(e) Polyepoxid; sowie
(f) 0,01 Gew-% bis 0,15 Gew-% Fettsäure-Natriumsalz in Bezug auf die Gesamtmasse der biologisch abbaubaren Zusammensetzung, wobei das Fettsäure-Natriumsalz vorzugsweise ein Natriumstearat ist.

2. Biologisch abbaubare Polymerzusammensetzung gemäß Anspruch 1, wobei der eine oder die mehreren biologisch abbaubaren Polyester jeweils unabhängig aus Polycaprolacton, Polymilchsäure, Polyhydroxybutyrat, Polyethylensuccinat, Polybutylenadipat-Terephthalat, Polyhydroxybutyratvalerat, Polybutylensuccinat, Polybutylenadipat, Celluloseacetatbutyrat, Celluloseacetatpropionat sowie Kombinationen aus diesen ausgewählt sind.

3. Biologisch abbaubare Polymerzusammensetzung gemäß Anspruch 1 oder 2, wobei das Polysaccharid aus Stärke, Glycogen, Chitosan, Cellulose sowie Kombinationen aus diesen ausgewählt ist, vorzugsweise wobei das Polysaccharid aus Stärke besteht und diese Stärke vorzugsweise in Form von thermoplastischer Stärke (TPS) vorliegt.

4. Biologisch abbaubare Polymerzusammensetzung gemäß Anspruch 3, wobei die thermoplastische Stärke (TPS) einen Weichmacher umfasst, der aus Glycerol, Maltitol, Mannitol, Xylitol, Erythritol, Diethylenglycol, Trimethylenglycol, Triethylcitrat (TEC), Sorbitol und Kombinationen aus diesen ausgewählt ist.

5. Biologisch abbaubare Polymerzusammensetzung gemäß einem der Ansprüche 1 bis 4, wobei das Karbonsäure-Seitengruppen aufweisende Polymer aus Ethylen-Acrylsäure-Copolymer, Poly(ethylenacrylsäure-Vinylalkohol), Poly(acrylsäure), Poly(methacrylsäure), Ethylen-Methacrylsäure-Copolymeren, Poly(acrylamid-Acrylsäure) sowie Kombinationen aus diesen ausgewählt ist, vorzugsweise wobei das Karbonsäure-Seitengruppen aufweisende Polymer aus Ethylen-Acrylsäure-Copolymer besteht.

6. Biologisch abbaubare Polymerzusammensetzung gemäß einem der Ansprüche 1 bis 5, wobei das Polyepoxid aus Bisphenol-A-diglycidylether, Butadien-Diepoxid, 3,4-Epoxycyclohexylmethyl-(3,4-epoxy) Cyclohexan-Carboxylat, Vinyl-Cyclohexen-Dioxid, 4,4'-di(1,2-epoxyethyl)-Diphenylether, 4,4'-(1,2-epoxyethyl) Biphenyl, 2,2-bis (3,4-epoxycyclohexyl) Propan, Resorcin-Diglycidylether, Phloroglucin-Diglycidylether, Methylphloroglucin-Diglycidylether, bis(2,3-epoxycyclopentyl) Ether, 2-(3,4-epoxy) Cyclohexan-5,5-spiro(3,4-epoxy)-Cyclohexan-m-Dioxan, bis(3,4-epoxy-6-methylcyclohexyl) Adipat, N,N'-m-phenylen-bis (4,5-epoxy-1,2-Cyclohexandicarboxyimid), p-Aminophenol-Triglycidylether, Polyallylglycidylether, 1,3,5-tri(1,2-epoxyethyl) Benzol, 2,2',4,4'-Tetraglycidoxybenzophenon, Tetraglycidoxytetraphenylethan, Polyglycidylether von Phenol-Formaldehyd-Novolac, Triglycidylether von Glycerin, Triglycidylether von Trimethylolpropan, Polyglycidyl (meth)acrylat-Oligomeren und (Co)polymeren sowie Kombinationen aus diesen ausgewählt ist.

7. Biologisch abbaubare Polymerzusammensetzung gemäß einem der Ansprüche 1 bis 6, wobei die Zusammensetzung Bestandteile (a) - (f) und/oder (ein) aus einer Reaktion zwischen den Bestandteilen gebildete(s) Produkt(e) in einem Bereich von
- ca. 40 Gew-% bis ca. 80 Gew-% von (a),
- 5 Gew-% bis 30 Gew-% von (b);
- 1 Gew-% bis 8 Gew-% von (c);
- 0,01 Gew-% bis 0,15 Gew-% von (d);
- 0,2 Gew-% bis 0,5 Gew-% von (e); und
- 0,025 Gew-% bis 0,15 Gew-% von (f),
in Bezug auf die Gesamtmasse von (a) - (f) und derart umfasst, dass die Gesamtmasse dieser Bestandteile mindestens ca. 50 Gew-% der Gesamtmasse der biologisch abbaubaren Polymerzusammensetzung darstellt.

8. Biologisch abbaubare Polymerzusammensetzung gemäß Anspruch 6, wobei das Polysaccharid in Form von thermoplastischer Stärke (TPS) vorliegt, die einen Weichmacher ausgewählt aus Glycerol, Maltitol, Mannitol, Xylitol, Erythritol, Diethylenglycol, Trimethylenglycol, Triethylcitrat (TEC), Sorbit und Kombinationen aus diesen umfasst, und wobei der Weichmacher in einer Menge von bis zu 25 Gew-% in Bezug auf die Gesamtmasse der Zusammensetzung vorliegt.

9. Biologisch abbaubare Polymerzusammensetzung gemäß einem der Ansprüche 1 bis 8, die in der EN 13432 dargelegte Kriterien der biologischen Abbaubarkeit erfüllt.

10. Folienbahn aus einer biologisch abbaubaren Polymerzusammensetzung gemäß einem der Ansprüche 1 bis 9.

11. Verfahren zur Herstellung einer biologisch abbaubaren Polymerzusammensetzung, wobei das Verfahren umfasst das Schmelzvermischen eines Masterbatch und von Bestandteilen (A), die ein oder mehrere biologisch abbaubare Polyester und Polyepoxid umfassen, wobei das Masterbatch durch Schmelzvermischen von Bestandteilen (B), die ein oder mehrere biologisch abbaubare Polyester, Polysaccharid, Polymer mit Karbonsäure-Seitengruppen umfassen, und einem Umesterungskatalysator gebildet worden ist, und wobei die Bestandteile (A) und/oder (B) weiterhin Fettsäure-Natriumsalz in einer Menge zur Bereitstellung von 0,01 Gew-% bis 0,15 Gew-% des Natriumsalzes in der daraus resultierenden, biologisch abbaubaren Polymerzusammensetzung enthalten.

12. Verfahren gemäß Anspruch 11, wobei das Masterbatch die einzige Polysaccharidquelle liefert, die mit Bestandteilen A schmelzvermischt wird, um die biologisch abbaubare Polymerzusammensetzung zu bilden.

13. Verfahren gemäß Anspruch 11 oder 12, wobei die biologisch abbaubare Polymerzusammensetzung durch Schmelzvermischen von;
- 20 Gew-% bis 50 Gew-% des Masterbatch,
- 40 Gew-% bis 80 Gew-% von einem oder mehreren biologisch abbaubaren Polyestern;
- 0,2 Gew-% bis 0,5 Gew-% Polyepoxid; und
- 0 Gew-% bis 0,15 Gew-% Fettsäure-Natriumsalz;
in Bezug auf die Gesamtmenge dieser Bestandteile und derart hergestellt wird, dass (i) die Gesamtmasse dieser Bestandteile mindestens 50 Gew-% der Gesamtmasse der daraus resultierenden, biologisch abbaubaren Polymerzusammensetzung darstellt, und (ii) die Gesamtmasse von Fettsäure-Natriumsalz in der daraus resultierenden, biologisch abbaubaren Polymerzusammensetzung zwischen 0,025 Gew-% und 0,15 Gew-% beträgt.

14. Verfahren gemäß einem der Ansprüche 11 bis 13, wobei das Masterbatch durch Schmelzvermischen von
- 5 Gew-% bis 30 Gew-% eines oder mehreren biologisch abbaubaren Polyestern;
- 30 Gew-% bis 55 Gew-% Polysaccharid;
- 5 Gew-% bis 15 Gew-% Polymer mit Karbonsäure-Seitengruppen;
- 0,05 Gew-% bis 0,3 Gew-% Umesterungskatalysator; sowie
- 0 Gew-% bis 0,3 Gew-% Fettsäure-Natriumsalz;
in Bezug auf die Gesamtmasse dieser Bestandteile und derart hergestellt wird, dass die Gesamtmasse dieser Bestandteile mindestens 50 Gew-% der Gesamtmasse des Masterbatch darstellt.

15. Verfahren gemäß einem der Ansprüche 11 bis 14, wobei das eine oder die mehreren biologisch abbaubaren Polyester jeweils unabhängig aus Polycaprolacton, Polymilchsäure, Polyhydroxybutyrat, Polyethylensuccinat, Polybutylenadipat-Terephthalat, Polyhydroxybutyratvalerat, Polybutylensuccinat, Polybutylenadipat, Celluloseacetatbutyrat, Celluloseacetatpropionat und Kombinationen aus diesen ausgewählt sind, wobei das Polysaccharid aus Stärke besteht, wobei das Karbonsäure-Seitengruppen aufweisende Polymer aus Ethylenacrylsäure-Copolymer besteht, wobei der Umesterungskatalysator ein Alkalimetallhydroxid ist, wobei das Polyepoxid aus Bisphenol-A-Diglycidylether, Butadien-Diepoxid, 3,4-Epoxycyclohexylmethyl-(3,4-epoxy) Cyclohexan-Carboxylat, Vinyl-Cyclohexen-Dioxid, 4,4'-di(1,2-epoxyethyl)-Diphenylether, 4,4'-(1,2-epoxyethyl) Biphenyl, 2,2-bis (3,4-epoxycyclohexyl) Propan, Resorcin-Diglycidylether, Phloroglucin-Diglycidylether, Methylphloroglucin-Diglycidylether, bis(2,3-epoxycyclopentyl) Ether, 2-(3,4-epoxy) Cyclohexan-5,5-spiro(3,4-epoxy)-Cyclohexan-m-Dioxan, bis (3,4-epoxy-6-methylcyclohexyl) Adipat, N,N'-m-Phenylen-bis (4,5-epoxy-1,2-cyclohexandicarboxyimid), Triglycidylether von p-Aminophenol, Polyallylglycidylether, 1,3,5-tri(1,2-epoxyethyl) Benzol, 2,2',4,4'-Tetraglycidoxybenzophenon, Tetraglycidoxytetraphenylethan, Polyglycidylether von Phenol-Formaldehyd-Novolac, Triglycidylether von Glycerin, Triglycidylether von Trimethylolpropan, Polyglycidyl(meth)acrylat-Oligomeren und (Co)polymeren sowie Kombinationen aus diesen ausgewählt ist, und wobei das Fettsäure-Natriumsalz aus Natriumstearat besteht.

## Revendications

1. Composition polymère biodégradable comprenant les composants (a) à (f) suivants et/ou un ou plusieurs produits formés à partir d'une réaction entre les composants :
(a) un ou plusieurs polyesters biodégradables ;
(b) un polysaccharide ;
(c) un polymère contenant des groupes acide carboxylique pendants ;
(d) un catalyseur de transestérification, ledit catalyseur de transestérification étant de préférence un hydroxyde de métal alcalin ;
(e) un polyépoxyde ; et
(f) 0,01 % en poids à 0,15 % en poids d'un sel de sodium d'acide gras par rapport au poids total de la composition biodégradable, ledit sel de sodium d'acide gras étant de préférence le stéarate de sodium.

2. Composition polymère biodégradable selon la revendication 1, dans laquelle le ou les polyesters biodégradables sont choisis chacun indépendamment parmi une polycaprolactone, un poly(acide lactique), un polyhydroxybutyrate, un poly(succinate d'éthylène), un poly(téréphtalate d'adipate de butylène), un poly(valérate d'hydroxybutyrate), un poly(succinate de butylène), un poly(adipate de butylène), un butyrate d'acétate de cellulose, un propionate d'acétate de cellulose et leurs combinaisons.

3. Composition polymère biodégradable selon la revendication 1 ou 2, dans laquelle le polysaccharide est choisi parmi un amidon, le glycogène, le chitosane, la cellulose et leurs combinaisons, de préférence dans lequel le polysaccharide est un amidon, ledit amidon étant de préférence sous la forme d'un amidon thermoplastique (TPS).

4. Composition polymère biodégradable selon la revendication 3, dans laquelle l'amidon thermoplastique (TPS) comprend un plastifiant choisi parmi le glycérol, le maltitol, le mannitol, le xylitol, l'érythritol, le diéthylèneglycol, le triméthylèneglycol, le citrate de triéthyle (TEC), le sorbitol et leurs combinaisons.

5. Composition polymère biodégradable selon l'une quelconque des revendications 1 à 4, dans laquelle le polymère contenant des groupes acide carboxylique pendants est choisi parmi un copolymère d'éthylène/ acide acrylique, un poly(éthylène/acide acrylique/ alcool vinylique), un poly(acide acrylique), un poly-(acide méthacrylique), les copolymères d'éthylène/acide méthacrylique, un poly(acrylamide/acide acrylique) et leurs combinaisons, de préférence dans lequel le polymère contenant des groupes acide carboxylique pendants est un copolymère d'éthylène/acide acrylique.

6. Composition polymère biodégradable selon l'une quelconque des revendications 1 à 5, dans laquelle le polyépoxyde est choisi parmi le diglycidyléther de bisphénol A, le butadiène diépoxyde, le (3,4-époxy)-cyclohexane-carboxylate de 3,4-époxycyclohexylméthyle, le vinylcyclohexènedioxyde, le 4,4'-di(1,2-époxyéthyl)-diphényléther, le 4,4'-(1,2-époxyéthyl)biphényle, le 2,2-bis(3,4-époxycyclohexyl)propane, le diglycidyléther de résorcinol, le diglycidyléther de phloroglucinol, le diglycidyléther de méthylphloroglucinol, le bis(2,3-époxycyclopentyl)éther, le 2-(3,4-époxy)cyclohexane-5,5-spiro(3,4-époxy)-cyclohexane-m-dioxane, l'adipate de bis(3,4-époxy-6-méthylcyclohexyle), le N,N'-m-phénylène-bis(4,5-époxy-1,2-cyclohexanedicarboxylmide), le triglycidyléther de p-amino-phénol, le polyallyl-glycidyléther, le 1,3,5-tri(1,2-époxyéthyl)benzène, la 2,2',4,4'-tétraglycidoxybenzophénone, le tétra-glycidoxytétraphényléthane, le polyglycidyléther de phénol-formaldéhyde novolaque, le triglycidyléther de glycérine, le triglycidyléther de triméthylolpropane, les oligomères et (co)polymères de poly((méth)acrylate de glycidyle) et leurs combinaisons.

7. Composition polymère biodégradable selon l'une quelconque des revendications 1 à 6, dans laquelle la composition comprend les composants (a) à (f) et/ou un ou plusieurs produits formés à partir d'une réaction entre les composants, à raison de :
- environ 40 % en poids à 80 % en poids de (a) ;
- 5 % en poids à 30 % en poids de (b) ;
- 1 % en poids à 8 % en poids de (c) ;
- 0,01 % en poids à 0,15 % en poids de (d) ;
- 0,2 % en poids à 0,5 % en poids de (e) ; et
- 0,025 % en poids à 0,15 % en poids de (f),
par rapport au poids total de (a) à (f), et de telle sorte que le poids total de ces composants représente environ 50 % en poids du poids total de la composition polymère biodégradable.

8. Composition polymère biodégradable selon la revendication 6, dans laquelle le polysaccharide est sous la forme d'un amidon thermoplastique (TPS) comprenant un plastifiant choisi parmi le glycérol, le maltitol, le mannitol, le xylitol, l'érythritol, le diéthylèneglycol, le triméthylèneglycol, le citrate de triéthyle (TEC), le sorbitol et leurs combinaisons, et dans lequel le plastifiant est présent en une quantité allant jusqu'à 25 % en poids par rapport au poids total de la composition.

9. Composition polymère biodégradable selon l'une quelconque des revendications 1 à 8, qui satisfait les critères de biodégradabilité de la norme EN 13432.

10. Feuille de film formée à partir d'une composition polymère biodégradable selon l'une quelconque des revendications 1 à 9.

11. Procédé de préparation d'une composition polymère biodégradable, ledit procédé comprenant le mélange à l'état fondu d'un mélange maître et de constituants (A) qui comprennent un ou plusieurs polyesters biodégradables et un polyépoxyde, dans lequel le mélange maître a été formé par le mélange à l'état fondu de constituants (B) qui comprennent un ou plusieurs polyesters biodégradables, un polysaccharide, un polymère contenant des groupes acide carboxylique pendants et un catalyseur de transestérification, et dans lequel les constituants (A) et/ou (B) comprennent en outre un sel de sodium d'acide gras en une quantité permettant de fournir 0,01 % en poids à 0,15 % en poids du sel de sodium dans la composition polymère biodégradable résultante.

12. Procédé selon la revendication 11, dans lequel le mélange maître fournit l'unique source de polysaccharide qui est mélangé à l'état fondu avec les constituants A pour former la composition polymère biodégradable.

13. Procédé selon la revendication 11 ou 12, dans lequel la composition polymère biodégradable est préparée en mélangeant ensemble à l'état fondu :
- 20 % en poids à 50 % en poids du mélange maître ;
- 40 % en poids à 80 % en poids d'un ou de plusieurs polyesters biodégradables ;
- 0,2 % en poids à 0,5 % en poids d'un polyépoxyde ; et
- 0 % en poids à 0,15 % en poids d'un sel de sodium d'acide gras ;
par rapport à la quantité totale de ces composants, et de telle sorte que (i) le poids total de ces composants représente au moins 50 % en poids du poids total de la composition polymère biodégradable résultante, et (ii) le poids total du sel de sodium d'acide gras dans la composition polymère biodégradable résultante soit dans la plage allant de 0,025 % en poids à 0,15 % en poids.

14. Procédé selon l'une quelconque des revendications 11 à 13, dans lequel le mélange maître est préparé en mélangeant ensemble à l'état fondu :
- 5 % poids à 30 % en poids d'un ou de plusieurs polyesters biodégradables ;
- 30 % en poids à 55 % en poids d'un polysaccharide ;
- 5 % en poids à 15 % en poids d'un polymère contenant des groupes acide carboxylique pendants ;
- 0,05 % en poids à 0,3 % en poids d'un catalyseur de transestérification ; et
- 0 % en poids à 0,3 % en poids d'un sel de sodium d'acide gras ;
par rapport au poids total de ces composants, et de telle sorte que le poids total de ces composants représente au moins 50 % en poids du poids total du mélange maître.

15. Procédé selon l'une quelconque des revendications 11 à 14, dans lequel le ou les polyesters biodégradables sont choisis chacun indépendamment parmi une polycaprolactone, un poly(acide lactique), un polyhydroxybutyrate, un poly(succinate d'éthylène), un poly(téréphtalate d'adipate de butylène), un poly(valérate d'hydroxy-butyrate), un poly(succinate de butylène), un poly-(adipate de butylène), un butyrate d'acétate de cellulose, un propionate d'acétate de cellulose et leurs combinaisons, dans lequel le polysaccharide est un amidon, dans lequel le polymère contenant des groupes acide carboxylique pendants est un copolymère d'éthylène/acide acrylique, dans lequel le catalyseur de transestérification est un hydroxyde de métal alcalin, dans lequel le polyépoxyde est choisi parmi le diglycidyléther de bisphénol A, le butadiène diépoxyde, le (3,4-époxy)cyclohexane-carboxylate de 3,4-époxy-cyclohexylméthyle, le vinylcyclohexènedioxide, le 4,4'-di(1,2-époxyéthyl)-diphényléther, le 4,4'-(1,2-époxy-éthyl)biphényle, le 2,2-bis(3,4-époxycyclohexyl)propane, le diglycidyléther de résorcinol, le diglycidyléther de phloroglucinol, le diglycidyléther de méthylphloroglucinol, le bis(2,3-époxycyclopentyl)éther, le 2-(3,4-époxy)cyclohexane-5,5-spiro(3,4-époxy)-cyclohexane-m-dioxane, l'adipate de bis(3,4-époxy-6-méthylcyclohexyle), le N,N'-m-phénylène-bis(4,5-époxy-1,2-cyclohexanedicarboxylmide), le triglycidyléther de p-amino-phénol, le polyallylglycidyléther, le 1,3,5-tri(1,2-époxyéthyl)benzène, la 2,2',4,4'-tétraglycidoxybenzophénone, le tétraglycidoxytétraphényléthane, le polyglycidyléther de phénol-formaldéhyde novolaque, le triglycidyléther de glycérine, le triglycidyléther de triméthylolpropane, les oligomères et (co)polymères de poly((méth)acrylate de glycidyle) et leurs combinaisons, et dans lequel le sel de sodium d'acide gras est le stéarate de sodium.
